# EUROPEAN PATENT APPLICATION

(11) **EP 2 720 189 A1**
(43) Date of publication of application: **16.04.2014**
(21) Application number: 12382394.0
(22) Date of filing: 11.10.2012
(51) Int. Cl.: G06T 1/00

(54) **Photogrammetric system and method for three-dimensional avatars generation**

(71) Applicant: Metria Digital, S.L., 33428 Llanera (ES); Soluciones Antropometricas, S.L., 33428 Llanera (ES); Intelmec Ingenieria, S.L., 33428 Llanera (ES)
(72) Inventor: Areces Iglesias, Ignacio, E-33428 LLANERA (ES); De Las Heras Castano, Angel, E-33203 GIJÓN (ES); Luengo Azpiazu, Juan Ignacio, E-33820 GRADO (ES); Olalla Mnenéndez, Rodrigo, E-33207 GIJÓN (ES); Vigil Caballero, Efrén, E-33428 LLANERA (ES); Pérez Méndez, Antonio, E-33428 LLANERA (ES); Rodrìguez Villar, Jacobo, E-33204 GIJÓN (ES); Ruiz Alvarez, Manuel, E-33401 AVILÉS (ES); Martos De La Torre, Antonio, E-33011 OVIEDO (ES); Corrales Gonzàlez, José Antonio, E-33204 GIJÓN (ES); Zurita Hevia, Rubén, E-33204 GIJÓN (ES); Muniz Sanchez, Rubén, E-33204 GIJÓN (ES); Lerma Garcia, José Luis, E-46022 VALENCIA (ES); Navarro Tarìn, Santiago, E-46370 CHIVA (ES)
(74) Representative: ABG Patentes, S.L.

(57) **Abstract**

System and method for generating 3-D avatars by means of the acquisition of images from models (11) that include a control marks (12) arrangement on its body outer surface. This system comprises Images Acquisition Means (2), Electronic Control Means (3), a booth (1) and a mesh (10) for the model. The method comprises the stages of acquisition and processing of the images.

## Description

### FIELD OF THE INVENTION

The invention relates to the generation of a three-dimensional model, or avatar, by means of photogrammetric techniques. Specifically, the object of the invention is a system and method intended for generation of three-dimensional avatars based on photogrammetry.

### BACKGROUND OF THE INVENTION

Systems for whole digitalization of the human body are well known since years ago. Nevertheless, their high costs pushes them to be used into limited and exclusive fields, as ergonomics, military industry, film production, luxury cars, etc.

In recent years new techniques and methods have been developed. With lower costs, these methods allow to reach more applications in fashion, medicine or sport industries, but always on high end products.

Current used technologies could be sorted in three big groups:
- Laser scanning.
- Light pattern projection.
- Image based processing and modelling.

The laser scanning technique consists of the use of a laser source which throws one or more laser beams on the human body. At the same time, a camera records the scene and, by triangulation techniques, the human body surface can be reconstructed. Drawbacks of this technique relay on safety restrictions (mainly on eyes and other sensitive parts of the body), high manufacturing and maintenance costs (due to required accuracy during operation and maintenance), required time to data acquisition and the mistakes caused by unintentional movements of the person. Some devices using this technology for whole body scanning are "Vitus" range by Vitronic GmbH, "Body Scanfit" by Cad Modelling Ergonomics and "NX-16 3D Body Scanner" by TC2.

Light pattern projection technique begins with the projection of structured light patterns on the human body. A light sensor, as a camera for instance, captures the scene and then the three-dimensional geometry of the body is obtained by triangulation techniques on all the patterns. Main drawback of this technique comes from the need of several devices in order to capture the whole body geometry. As this technique requires the use of several devices for capturing the whole body geometry - due to the close range of these devices- and it is not possible to use all of them at the same time -due to interferences among them-, its main drawback is a long required time for capturing images. Some devices using this technology are "Fullbody Scanner" by InSpeck Inc. and "Mephisto Body" by 4D Dynamics.

The image based processing and modelling technology obtains the three-dimensional geometry of the human body by image processing. There are two different techniques: silhouette extraction and photogrammetry. Silhouette extraction method is based on capturing images of a body located against a proper background to get a high contrast. Photogrammetry method gets the human body geometry by processing two-dimensional images. Drawbacks of these methods are a long time for image processing -longer than in previous technologies- and a lower accuracy. On the other hand, the data acquisition process is faster than in abovementioned technologies.

The document US7103211 shows an example of device based on photogrammetry. It is called "Method and apparatus for generating 3D face models from one camera" and it generates a 3-D model from a sequence of images that are produced from a single camera when a user is moving his/her head steadily from one direction to another.

The document DE102004036491 shows another example. It is called "Model doll manufacturing method, involves computing molded body data by processor based on body surface data, and producing three-dimensional molded body corresponding to body shape of scanned person based on molded body data" and it describes the equipment for scanning the 3-D surface of a human body and for supplying the 3-D geometry data of that surface. Those data can be used then for manufacturing a real model.

The technical paper "Digital close range photogrammetry for 3D body scanning for custom-made garments", by G. Percoco, depicts another example. In this case, the images come from eight cameras, under computer control, and four 100 W lamps. Each camera captures six images and commercial software matches the points. The average error coming from the measurement of a whole human body by this method was 0,97 %.

The required time to obtain an avatar is that required for data capture plus that required for data processing. The capture time is quite important, because any movement made by the model during that period will entail accuracy losses. State-of-the-art photogrammetry methods show capture times in the range of milliseconds. The average capture time for other methods are between 2 and 30 seconds. The processing time changes a lot from one method to another, but it does not affect the accuracy of measurements.

It is desirable to get a device that overcomes the previous mentioned drawbacks. It should let a quick data acquisition from the human body, which will avoid errors due to unintentional movements such as breath, pulse, blinking, etc. It should also be able to generate an avatar in a short time and to grant safety and privacy to the person during data acquisition process. It should be also as cheap as possible.

### SUMMARY OF THE INVENTION

The invention suggests an improved solution to the previous drawbacks. The invention relates to an images acquisition device according to claim 1, an images acquisition system according to claim 7, a 3-D avatars generation system according to claim 13, an images acquisition method according to claim 14, an images processing method according to claim 15, a method for obtaining a physical reproduction of a model according to claim 18, a computer software according to claim 19 and an electronic signal according to claim 20. Preferred embodiments of the invention are defined in dependent claims.

In a first inventive aspect, the invention shows an images acquisition device for models who comprise a control marks arrangement on their body outer surface, for the automatic generation of 3-D avatars, the device comprising:
- Images Acquisition Means, arranged around the model, for the acquisition of images of the body outer surface of said model, and
- Electronic Control Means for controlling said Images Acquisition Means; wherein:
- The control marks comprise at least one kind of coded marks of type of those with several bits.
- The Electronic Control Means are adapted to the synchronized activation of the Images Acquisition Means, and
- The Images Acquisition Means are arranged around the model in a way that:
   ○ each control mark on the model surface appears in at least two images,
   ○ at least six coded marks appear in each image taken by the Images Acquisition Means, and
   ○ the surface of the model and the control marks seen on this surface fills at least the 60 % of each image taken by the Images Acquisition Means.

The control marks arrangement on the model surface can be carried out in different ways. For example, the projection of an image on the model, said image comprising the desired control marks pattern, the use of a tight mesh comprising such control marks or a combination of both methods can be pointed out.

Along the whole document, the word "model" shall be understood as an object, normally a human being, whose outer body surface is intended to be captured for the generation of an avatar.

Along the whole document, "control mark" shall be understood as any element on the model's surface, either projected on it or stamped or comprised in any other way in a cloth tightened to that surface, that can be used as a reference in order to carry out the different methods of the invention.

Along the whole document, the word "avatar" shall mean a 3-D representation that tries to imitate as better as possible the outer image of the aforementioned model.

In the particular embodiments, the Images Acquisition Means are commercial photographic cameras prepared for being controlled by the control means. Such photographic cameras will capture images from the model that will contain the required control marks to carry out the different methods of the invention.

In a particular embodiment, the equipment comprises in addition a computer in such a way that the Electronic Control Means connect the Images Acquisition Means to said computer, which manages the power supply, the focusing and the shooting of said Images Acquisition Means throughout said Electronic Control Means and receives the data obtained by the Images Acquisition Means by means of the Electronic Control Means.

In a particular embodiment, the images acquisition device comprises at least a signal distribution module that carries out the galvanic isolation of the Images Acquisition Means in groups of at least four units and comprises galvanic isolation means and anti-interference means that prevent circulation of interferences between the Images Acquisition Means. In a more particular embodiment, such anti-interference means are a flyback diode.

In a particular embodiment, the images acquisition device comprises 32 images acquisition means.

In a particular embodiment, the images acquisition device comprises lighting means adapted for their used in coordination with the Images Acquisition Means.

In a second inventive aspect, present invention describes an images acquisition system on models that comprise a control marks arrangement on its outer body surface, for the automatic generation of 3-D avatars, said system comprising a device as described in the first inventive aspect and a mesh adapted for being tightly fitted on the model, said mesh comprising said control marks arrangement on its surface.

The mesh is a piece to cover the model with, in such a way that the final shape of the mesh, once placed on the model, imitates the shape of the model's outer surface, in such a way that the distance between a control mark and the more closer point on the model's surface is preferably less than 1 mm.

Advantageously, by using a mesh on the model, the obtained avatar is a more suitable avatar for some uses, for instance as a virtual dummy, because the use of a mesh avoids the irrelevant skin flaws, that turns out to be irrelevant or even bad for this kind of uses.

In a preferred embodiment of the invention, the images acquisition system comprises a supporting structure for the images acquisition device. In a more preferred embodiment of the invention, said supporting structure comprises calibration marks suitable for the calibration of the Images Acquisition Means. In a more preferred embodiment of the invention, said supporting structure can be disassembled in several pa rts.

In a preferred embodiment of the invention, some control marks comprised on the mesh are circles, the diameters thereof being comprised between 3 and 6 mm and so that the distance between their centres is comprised between 12 and 20 mm.

In a preferred embodiment of the invention, the images acquisition system comprises means to project the control marks on the mesh.

In a third inventive aspect, present invention describes a system for the automatic generation of 3-D avatars, that comprises an images acquisition system according to the second inventive aspect, and a software for image processing adapted for the automatic generation of said 3-D avatar based on the images taken by the system for images acquisition.

In a fourth inventive aspect, the present invention describes a method for the acquisition of images from models that comprise a control marks arrangement on their surface, for the automatic generation of 3-D avatars, the method comprising the steps of acquiring images of said model by means of the system for images acquisition according to the third inventive aspect.

In a fifth inventive aspect, the present invention describes a method for processing the images acquired from models that comprise a control marks arrangement on their surface by an images acquisition method according to the fourth inventive aspect, for the automatic generation of 3-D avatars, **characterized in that** it comprises the following steps:
- detecting coded marks in the images;
- matching said coded marks;
- loading a previously stored absolute orientation of the Images Acquisition Means;
- recalculating the spatial positions of the Images Acquisition Means parting from said absolute orientation;
- checking the quality of the absolute orientation of the Images Acquisition Means;
- detecting the simple marks;
- matching the simple marks;
- checking the quality of the simple marks matching; and
- generating a triangle grid representing the model.

"Matching marks" means the identification process for each mark on each image, in order to establish a one-to-one correspondence between marks coming from every image.

In a particular embodiment of the invention, the images processing method comprises a calibration step before the detection of coded marks, wherein said calibration step comprises the following steps:
- capturing images while the booth is empty;
- detecting the calibration marks comprised in said images;
- matching the calibration marks;
- orientating the Images Acquisition Means;
- performing the absolute orientation of the obtained data, giving them metric scale and actual plummet;
- checking the quality of the aforementioned absolute orientation; and
- saving the data of said absolute orientation.

In a particular embodiment of the method according to the invention, only the images sharing control marks are chosen.

In a sixth inventive aspect, present invention describes a method for obtaining a physical replica at any scale parting from the data obtained by an images processing method according to the fifth inventive aspect.

In a seventh inventive aspect, present invention describes a computer software and a storage medium containing said software and being readable by a computer, said software **characterized in that** it comprises program code means for the generation of a 3-D avatar according to the fifth inventive aspect when said software is running on a computer. In a particular embodiment of the invention, this software is copied in a medium readable by a computer.

In an eighth inventive aspect, present invention describes an electronic signal that contains information, **characterized in that** it allows reconstruct a computer software according to the seventh inventive aspect.

### BRIEF DESCRIPTION OF THE DRAWINGS

These and other features and advantages of the invention will become clearly understood in view of the following detailed description of a preferred embodiment form, given only as an illustrative, not limitative example, referring to the attached drawings.
Figure 1 Scheme of a booth comprising the images acquisition devices (images acquisition means and control means), together with the lighting means.
Figure 2 Schematic diagram of a system according to the invention.
Figure 3 Example of a particular embodiment of a mesh comprising control marks.
Figure 4 Example of disposition of a 14-bit coded mark.

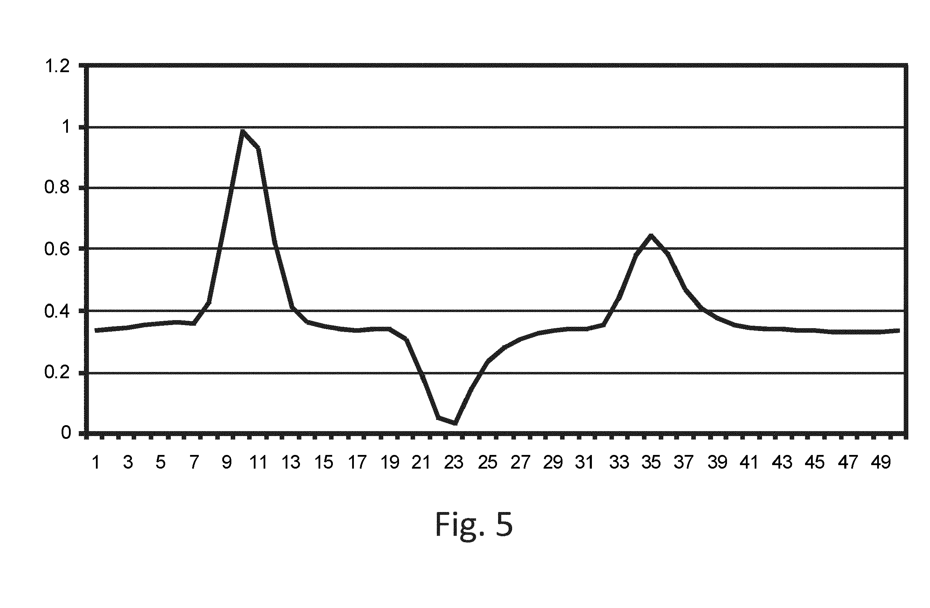

Figure 5 Graphic representation of the prototypal derivative of a coded mark, completed by the restitution software.

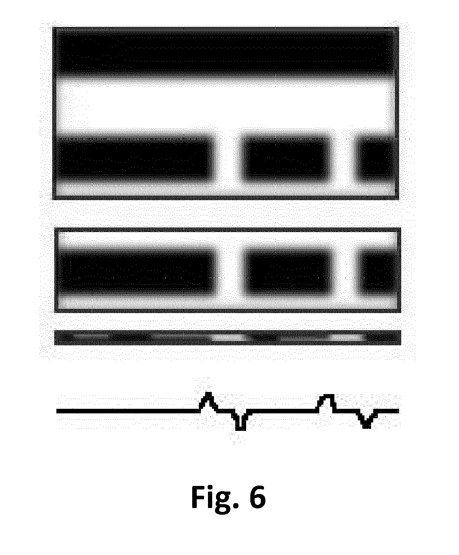

Figure 6 Graphical representation of the reduction of a mark to one dimension and the calculation of the derivative of said mark.
Figure 7 Schematic diagram of a method as per the invention.

### DETAILED DESCRIPTION OF THE INVENTION

The present invention describes a system and a method for the automatic generation of three-dimensional avatars departing from a model.

### Structure-booth-images acquisition means-lighting means set.

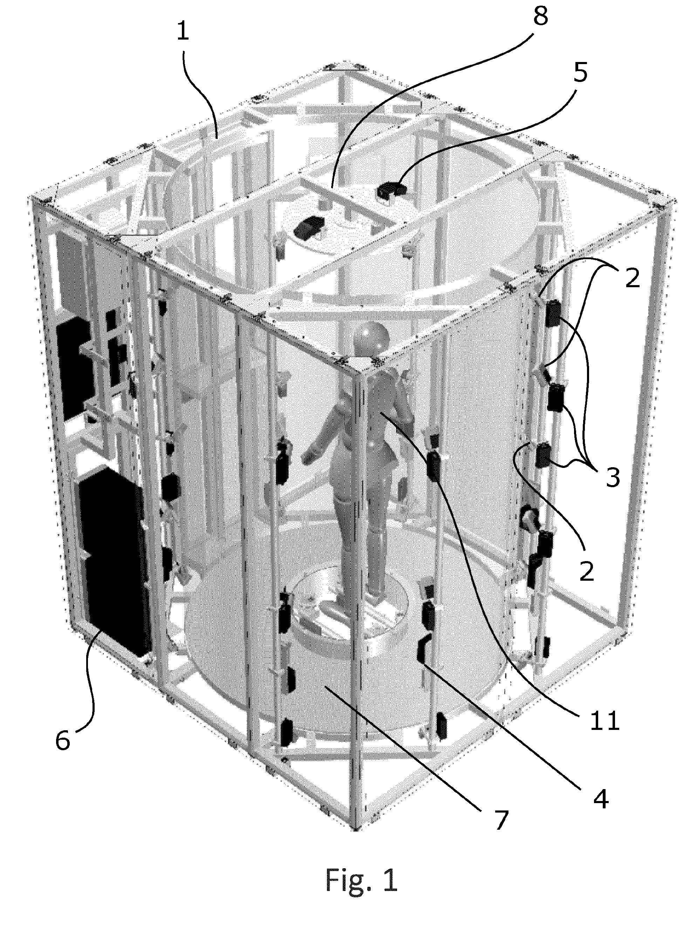

Figure 1 shows the scheme of a system for automatic avatars generation, according to a particular embodiment of the invention, in which a supporting structure, a booth (1), an internal booth coating including calibration marks (15) on its surface, several images acquisition means (2) and lighting means (5) are seen.

In all the particular embodiments, the images acquisition means (2) are photographic cameras.

The supporting structure is the one which houses the images acquisition means (2). Said images acquisition means (2) are attached to the booth (1) structure by means of several metal parts that allow their adequate spatial orientation. Said metal parts are also useful to hold the electronic control means (3), along with the signal distribution modules (4) yet to be described.

A booth (1) having inner and outer coatings is provided. The inner coating includes several calibration marks in order to be able to calibrate the photographic cameras. Advantageously, this booth (1) gives continuity to the support structure.

In a particular embodiment, this booth (1) has a cylindrical shape with a circular base.

In a particular embodiment, this booth (1) can be disassembled into several sections and comprises a series of adjustable feet, in order to leveling the assembly, once placed in its definitive location.

The booth's entry door is placed in one of these sections of the booth (1) along with the computer (6)prepared for images processing. Further, a tactile screen and an electrical board are included.

Further, a plurality of lighting means (5) are provided. In a particular embodiment, such lighting means (5) are placed under a small ceiling rose (8) hanging from the booth's (1) ceiling. In a particular embodiment, said lighting means (5) are oriented toward the inner booth's walls, in diametrically opposed positions. Advantageously, the ceiling rose (8) acts as an opaque screen and prevents the light emitted by the lighting means (5) from being directly oriented to any of the images acquisition means (2).

Said booth (1) also comprises a pedestal (7) on which the model is placed, in such a way that it remains more easily visible by the images acquisition means (2). In a particular embodiment, some lighting means are placed on said pedestal (7). In a particular embodiment, some images acquisition means (2) are also placed on said pedestal (7).

In a particular embodiment, the images acquisition means (2) are distributed along four circumferences that follow the booth's (1) contour, disposed at four different heights. In a particular embodiment, the system comprises 32 images acquisition (2) means, distributed along said four heights.

### Means of control of the images acquisition means (2)

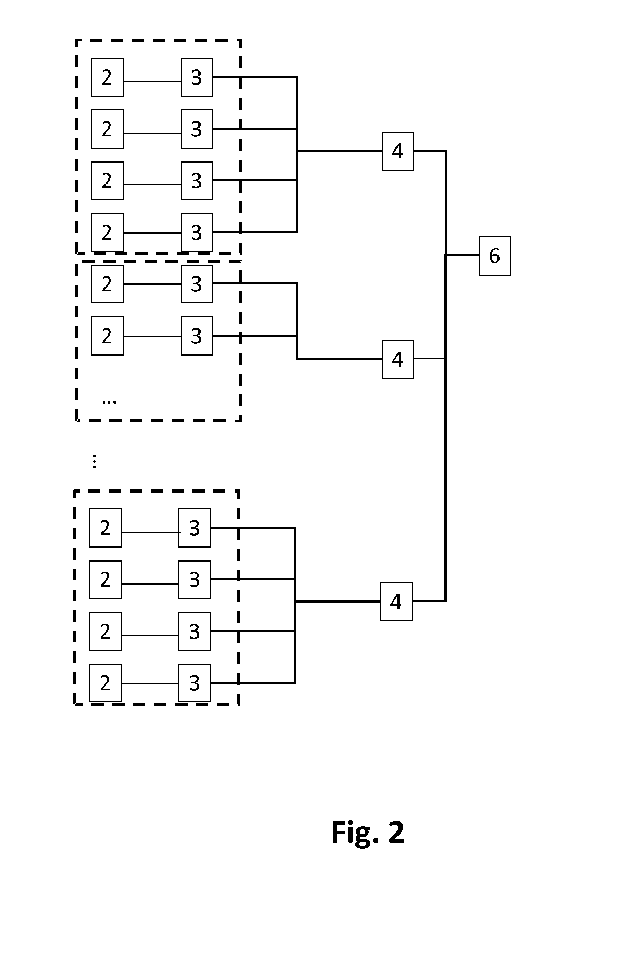

The images acquisition means (2) have a number of control means: the electronic control (3) means and the signal distribution modules (4). Figure 2 shows a scheme including these elements.

In a particular embodiment, the electronic control means (3) comprise an electronic module for synchronized shot, consisting in a circuit that allows connect the images acquisition means (2) to a computer (6) and the design of an interface to centralize the system's control from said computer (6), from where the sequence focusing-shooting for the images acquisition means (2) is programmed and the process of simultaneous discharge of the acquired images is automated. This digital design, with very low entry impedance is immune to interferences and ill-timed shots. The aim of each electronic module is feeding the images acquisition means (2) controlled by it, for which each module has a commuted, high-efficiency power supply. Further, it also has the mission of governing three relays the contacts of which are respectively connected in parallel with the starting, focusing and shooting pushbuttons. In a particular embodiment, each electronic module comprises 8 relays and 6 light indicators, of which two relays are dedicated to the starting-focusing-shooting control and the rest remains available for other functions.

The signal distribution modules (4) are PCBs which integrate the galvanic isolation of the cameras in groups of 4, while they include flyback diodes, to avoid the circulation of interferences from an images acquisition means (2) to another one connected to the same node.

### Mesh (10)

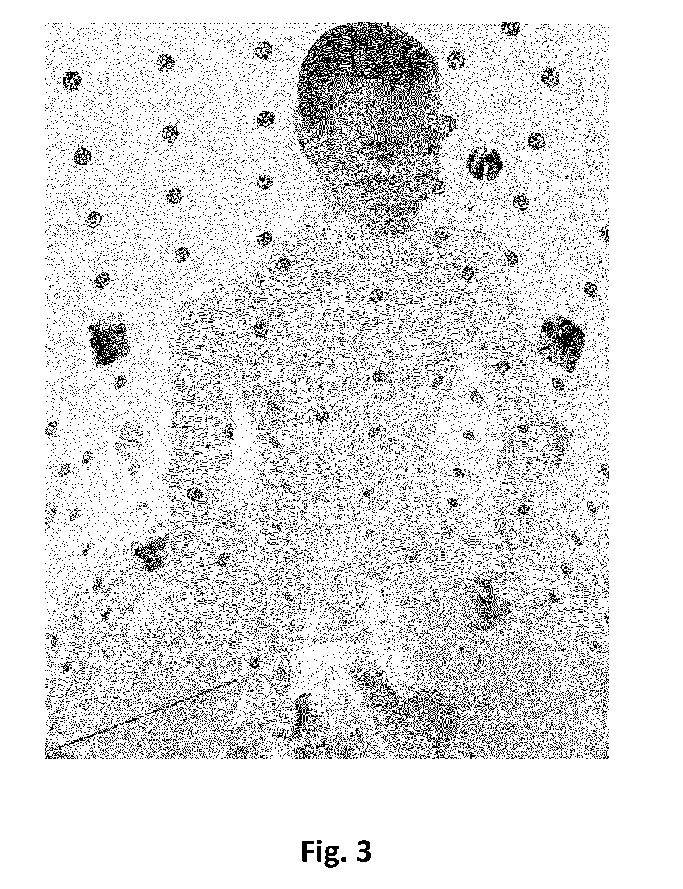

The subject enters into the booth (1) clad with a mesh (10) adjusted to his body and having a series of control marks (12) on him, recognized by the software and used by it to generate the avatar. Advantageously, this booth (1) guarantees the individual's privacy and, together with the mesh (10) existence, the psychological problems detected in other devices requiring the subject to be practically naked in the moment of data capture are prevented. Figure 3 shows a particular embodiment of this mesh.

The mesh (10) used in this embodiment is composed of two parts, the upper part, covering the trunk, arms and neck, and the lower one, covering the inferior limbs until the ankles. In a particular embodiment, the mesh fabric is white Lycra, with a composition of 60-90 % polyester and 10-40 % elastane, preferably 80 % polyester and 20 % elastane, which provides an optimum elasticity. Advantageously, the quality of the tissue increases its durability and resistance to washing, enabling reuse in various applications by different people, once washed.

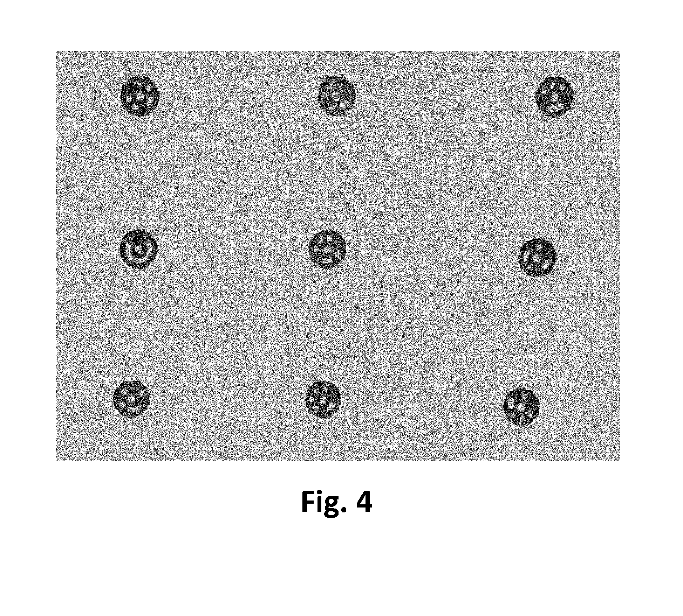

The mesh (10) is stamped by sublimation with two types of control marks (12):
- First, a plurality of simple marks (13) in a regular pattern, in order to allow its posterior restitution and obtain the three-dimensional grid. In a particular embodiment, said simple marks are black circles of 4 mm in diameter, with a distance of 14 mm between centres, and
- 14-bit coded marks (14), of type of those shown in figure 4, similar to calibration marks (15) that are also located in the booth (1) and serve to calibrate the images acquisition means (2), and are uniformly distributed on the whole body, except in the part of the mesh (10) corresponding to the lateral zone of the trunk and internal faces of the upper and lower limbs, where the density of the marks is larger than in the rest, due to being areas of difficult access which need a better characterization.

### Method to create the avatar

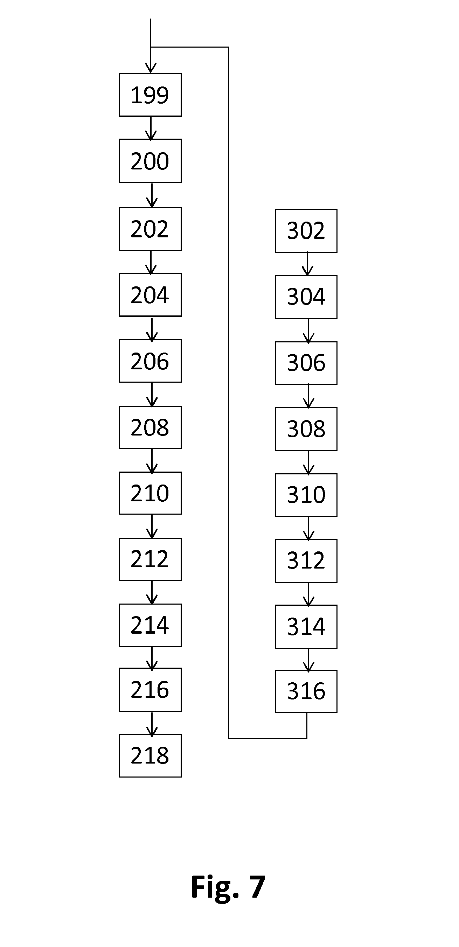

Figure 7 shows the outline of a method to perform the creation of the avatar. Said method includes the following steps:
- Placing (199) the model into the booth (1);
- Acquiring (200) images by the images acquisition means (2);
- Detecting (202) coded marks (14) in the images;
- Matching (204) said coded marks (14);
- Loading (206) the absolute orientation, previously stored, of the images acquisition means (2);
- Recalculating (208) the spatial positions of the images acquisition means (2) from said absolute orientation data;
- Checking (210) the quality of the absolute orientation of the images acquisition means (2);
- Matching (214) the simple marks (13);
- Checking (216) the quality of the matching of the simple marks (13); and
- Generating (218) a triangle grid representing the model (11);

The absolute orientation of the images acquisition means (2) is calculated before placing the model into the booth (1). Anyway, it is not necessary to calculate it every time the acquisition (200) of images is performed. This absolute orientation is also shown in figure 7, including the following steps:
- capturing (302) images while the booth (1) is empty;
- detecting (304) the calibration marks (15) comprised in said images;
- matching (306) said calibration marks (15);
- orienting (308) the Images Acquisition Means (2);
- performing (310) the absolute orientation of the obtained data, giving them metric scale and actual plummet;
- checking (312) the quality of the aforementioned absolute orientation; and
- saving (314) the data of said absolute orientation.

### Process of marks detection

Marks recognition, either simple marks (13) or coded marks (14), is performed by calls to several algorithmic methods. Said methods not only depart from the image to be processed and the searching parameters, but also receive parameters which indicate it whether the searched marks are simple marks (13) and/or coded marks (14). In a particular embodiment, the coded marks (14) have the same structure as the calibration marks (15), and they are only distinguishable by their numbering, so the method for detecting the coded marks (14) and the method for detecting the calibration marks (15) is the same.

Given a surface with simple marks (13) and coded marks (14), having in addition calibration marks (15). If all types of marks are to be detected, two callings to the method are needed: one for simple marks (13) and other for coded marks (14) and calibration marks (15).

The detection process of coded marks (14) and calibration marks (15) is based upon contour detection by means of a library called OpenCV (Intel Corporation^{®}).

For its part, the detection of simplified marks (13) can be carried out by any procedure of densification marks detection comprised in the state of the art. An example is the DPA commercial software from the German company Aicon 3D Systems: http://www.aicon3d.com/products/moveinspect-technology/dpa/at-a-glance.html

The detection of coded marks (14) and calibration marks (15) is the most complicated and delicate task, since the detection of false positives (erroneous readings) provokes a failure in the orientation and/or automatic anthropometric measurements, because they hugely affect the rest of properly referenced control marks (12).

Once the detection of simple marks (13) is performed, along with the coded marks (14) and calibration marks (15), it will be necessary to create the avatar from these data. To this purpose, the known "Beam Intersection Method" is used: once the same control mark (12) is identified in different images, given the spatial data of the images acquisition means (2) that have recorded said different images, the relative position of said control marks (12) can be located. This process is carried out on all the control marks (12) having the necessary information, i. e, which have been identified in at least two different images.

In a particular embodiment of the invention, the data obtained in any stage can be sent to a third party for its use in making a physical replica of the model (11).

## Claims

1. Device for acquisition of images from models (11) who comprise a control marks (12) arrangement on their body outer surface, for the automatic generation of 3-D avatars, the device comprising:
• Images Acquisition Means (2) arranged around the model (11), for the acquisition of images of the body outer surface of said model (11), and
• Electronic Control Means (3) for controlling such Images Acquisition Means; wherein:
• The control marks (12) comprise at least one kind of coded marks (14) among of type of those with several bits.
• The Electronic Control Means (3) are adapted to the synchronized activation of the Images Acquisition Means (2), and
• The Images Acquisition Means (2) are arranged around the model (11) in a way that:
○ ach control mark (12) on the model surface appears in at least two images,
○ at least six coded marks (14) appear in each image taken by the Images Acquisition Means (2), and
○ the surface of the model (11) and the control marks (12) seen on this surface fills at least the 60 % each image taken by the Images Acquisition Means (2).

2. Device for acquisition of images from models (11) according to claim 1, **characterised in that** it further comprises a computer (6) in such a way that the Electronic Control Means (3) connect the Images Acquisition Means (2) to said computer (6), which manages the power supply, focusing and shooting of said Images Acquisition Means (2) throughout said Control Electronic Means (3) and receives the data obtained by the Images Acquisition Means (2) by means of the Control Electronic Means (3).

3. Device for acquisition of images from models (11) according to any of preceding claims, **characterised in that** it comprises at least a Signal Distribution Module (4) that carries out the galvanic isolation of the Images Acquisition Means (2) in groups of at least four units and comprises galvanic isolation means and anti-interference means, that prevent the circulation of interferences among the Images Acquisition Means (2).

4. Device for acquisition of images from models (11) according to claim 3, **characterised in that** the anti-interference means are a fly-back diode.

5. Device for acquisition of images from models (11) according to any of preceding claims, **characterised in that** it comprises 32 Images Acquisition Means (2).

6. Device for acquisition of images from models (11) according to any of preceding claims, **characterised in that** it comprises lighting means (5), adapted for their use in coordination with the Images Acquisition Means (2).

7. System for acquisition of images from models (11) that comprise a control marks (12) arrangement on its outer surface, for the automatic generation of 3-D avatars, said system comprising:
• A device for acquisition of images from models (11) according to claims 1 to 3, and
• A Mesh (10) adapted for being tightly fitted on the model (11), said mesh (10) comprising said control marks (12) arrangement on its surface.

8. System for acquisition of images according to claim 7, comprising a supporting structure for the device for acquisition of images.

9. System for acquisition of images as claimed in claim 8, wherein the supporting structure comprises some calibration marks (15), suitable for calibration of the Images Acquisition Means (2).

10. System for acquisition of images according to any of claims 8 to 9, **characterised in that** the supporting structure can be disassembled in several parts.

11. System for acquisition of images according to any of claims 7 to 10, wherein some of the control marks (12) comprised in the mesh (10) are simple marks (13), preferably circles the diameter thereof being comprised between 3 and 6 mm and so that the distance between their centres is comprised between 12 and 20 mm.

12. System for acquisition of images according to any of claims 7 to 11, comprising means to project control marks (12) on the mesh (10).

13. System for automatic generation of 3-D avatars, including:
• a system for acquisition of images from models (11) according to any of claims 7 to 12, and
• an image-processing software adapted for the automatic generation of said three-dimensional avatar, based on the images taken by the system for images acquisition.

14. Method for the acquisition of images from models comprising a control marks arrangement on their surface, for the automatic generation of 3-D avatars, the method comprising the step of acquiring (200) images of said model (11) by means of the system for images acquisition according to any of Claims 7 to 12.

15. Method for the processing of images obtained from models comprising a control marks arrangement on their surface, by means of a method for the acquisition of images according to claim 14, for the automatic generation of 3-D avatars, **characterised in that** it comprises the following steps:
• detecting (202) coded marks (14) in the images;
• matching (204) said coded marks (14);
• loading (206) a previously stored absolute orientation of the Images Acquisition Means (2);
• recalculating (208) the spatial positions of the Images Acquisition Means (2) parting from said absolute orientation;
• checking (210) the quality of the absolute orientation of the Images Acquisition Means (2);
• detecting (212) the simple marks (13);
• matching (214) the simple marks (13);
• checking (216) the quality of the simple marks (13) matching; and
• generating (218) a triangle grid representing the model (11).

16. Method for the processing of images obtained from models, according to claim 15, **characterised in that** it comprises a calibration step previous to the initial detection step (202) of the coded marks (14), this calibration step comprising the steps of:
• capturing (302) images while the booth (1) is empty;
• detecting (304) the calibration marks (15) comprised in said images;
• matching (306) the calibration marks (15);
• orienting (308) the Images Acquisition Means (2);
• performing (310) the absolute orientation of the obtained data, giving them metric scale and actual plummet;
• checking (312) the quality of the aforementioned absolute orientation; and
• saving (314) the data of said absolute orientation.

17. Method for the processing of images according to any of claims 15 to 16, **characterised in that** only the images sharing control marks (12) are chosen.

18. Method for the obtaining of a physical replica at any scale, **characterised in that** it departs from the data obtained by a method for the processing of images obtained from models (11), according to any claim 15 to 17.

19. Computer software and computer-readable medium containing said software, **characterised in that** said computer software comprises program code means for the generation of a three-dimensional avatar by means of a method according to any claim 15 to 17 when said software runs on a computer.

20. Electronic signal containing information, **characterised in that** it allows reconstruct a computer software according to claim 19.
